# EUROPEAN PATENT SPECIFICATION

(11) **EP 1 552 662 B1**
(45) Date of publication and mention of the grant of the patent: **09.07.2008**
(21) Application number: 03771172.8
(22) Date of filing: 28.07.2003
(51) Int. Cl.: H04L 29/06, H04L 12/28

(54) **SYSTEM AND METHOD FOR COMMUNICATING DATA BETWEEN NETWORKS OPERATING UNDER DIFFERENT PROTOCOLS**
SYSTEM UND VERFAHREN ZUR ÜBERMITTLUNG VON DATEN ZWISCHEN NETZWERKEN, DIE UNTER VERSCHIEDENEN PROTOKOLLEN ARBEITEN
SYSTEME ET PROCEDE DE COMMUNICATION DE DONNEES ENTRE RESEAUX UTILISANT DIFFERENTS PROTOCOLES

(30) Priority: 26.07.2002 GB 0217355
(43) Date of publication of application: 13.07.2005
(73) Proprietor: Ericsson AB, Stockholm (SE)
(72) Inventor: HUNNEYBALL, Timothy, John, Nottingham NG4 3LZ (GB)
(74) Representative: Stasiewski, Piotr Grzegorz
(86) International application number: PCT/GB2003/003220
(87) International publication number: WO 2004/012414

(56) References cited:
- EP-A- 1 035 708
- US-A1- 2001 055 285
- MALKIN G: "RFC 2454: RIP Version 2" IETF RFC 2454, November 1998 (1998-11), XP002216843 Retrieved from the Internet: <URL:http://www.faqs.org/ftp/rfc/pdf/rfc24 53.txt.pdf> [retrieved on 2002-10-15]
- CIUREJ R F ET AL: "IP ROUTER FAULT TOLERANCE IN THE IDEN PACKET DATA SYSTEM" MOTOROLA TECHNICAL DEVELOPMENTS, MOTOROLA INC. SCHAUMBURG, ILLINOIS, US, vol. 32, 1 September 1997 (1997-09-01), pages 145-150, XP000741165 ISSN: 0887-5286

## Description

The present invention relates to the field of communications in general and to communications systems supporting more than one communications protocol and methods relating thereto in particular.

The International Standard Organization (ISO) has defined a standard model for networking (or communications) protocols known as the Open System Interconnect (OSI) model. This model is based on seven protocol layers. Other models for layered protocols have been specified by the Internet Engineering Task Force (IETF), such as one based on Transmission Control Protocol / Internet Protocol (TCP/IP), see IETF publications RFC 793, RFC 791.

In a communications system supporting more than one communications protocol there is a need to transfer data between networks operating under the different protocols. A protocol conversion device, such as a Transport Service Bridge (TSB) or a Transport-Layer Gateway (TLG) can provide for such data transfer. This transfer is facilitated if the upper layers (e.g. session, presentation, and application entities) of the different protocols are practically identical, with only the lower layers differing. Certain current protocols exhibit such practically identical higher layers of protocol (e.g.. session, presentation and application layers). A protocol conversion device, such as a Transport Service Bridge (TSB) provides for communication between two networks operating under different protocols but where there is a commonality of protocol above a certain layer, e.g. layer-4.

Conversion is implemented in a so-called "buffer layer" which is used to convert the data formats between that expected by one protocol and that expected by the other In a TCP/IP to OSI example, a TSB would make the TCP layer service look like an OSI TP4 layer service. This is accomplished by making the TCP layer emulate the TP4 layer. With such a TSB, the OSI application layer can extend over TCP/IP networks. Hence the same application layer can be used in both types of network. Only the underlying layers change between the two.

An example, by no means restricting the present invention, of a TSB is described in the IETF document RFC1006 "ISO Transport Service on top of the TCP" Version: 3 , May 1987. RFC 1006 defines how to produce OSI transport layer services on top of TCP. Other types of TSB are described, for example, in other IETF RFCs.

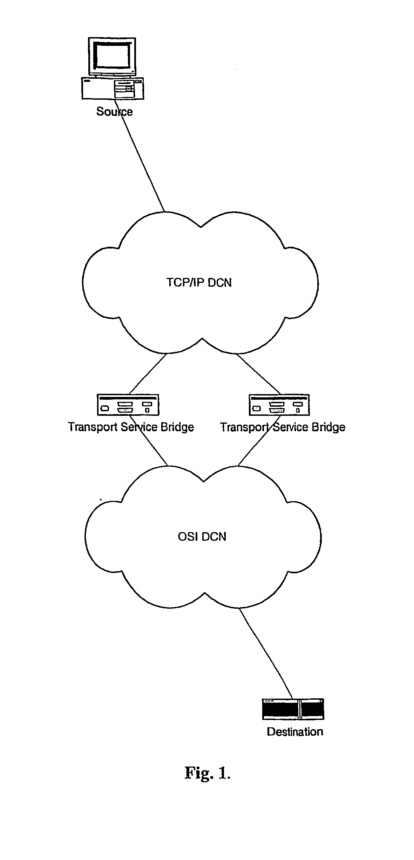

A drawback of using a TSB is that it can produce a single point of failure in the communications path between any two terminals that communicate through it. The use of the term "terminals" here is to be understood to encompass "end systems" in an OSI network and "hosts" in a TCP/IP network. A single point of failure is a point of failure that cannot be avoided as there is no alternative path to allow data to bypass it. To avoid a TSB becoming a single point of failure, one or more additional TSBs can be connected in parallel with the first TSB (Figure 1).

Some protocols comprise both connectionless and connection-orientated layers. If we consider the example of a network operating under OSI protocol and one operating under TCP/IP, the layers 4 associated with each of the two different protocols will be connection-oriented whereas the layer below (i.e. layer-3 - the Network layer where routing is carried out) will be connectionless. The connectionless nature of the Network layers means that, if more than one TSB are provided in parallel, it will be necessary to ensure that all messages communicated between a particular pair of terminals pass through the same TSB. If this is not done, the connection oriented nature of the layer-4 causes the connections to be unstable. An appropriate control protocol is therefore required to nominate one of the TSBs as the "active" TSB used to provide the communications path for those two terminals.

This instability can be illustrated using the analogy of a conventional telephone call. A connection-oriented layer-4 connection is analogous to a phone call in that there is a 'dialling' (set-up) phase, a 'call' phase, and a 'clear-down' phase. For the purposes of this analogy, the dialling phase of the call includes the transfer of further information beyond simple addressing information (i.e. agreements on how to govern the conversation - how long each party can speak without an acknowledgement, etc.). During the call phase, the conversation can be regarded as the exchange of a number of packets of data. However, unlike the words in an ordinary phone call, each packet has sufficient addressing information to get it to its destination, and contains further information such as a sequence number and a specific reference number for that call.

If party A and party B are situated in different administrations, they will have to go through a "bridge" function that is set up when the call is established. The call in each network has to be set up separately and a connection established between the two networks in the bridge. The directory number (address) used by party A in network A to indicate party B cannot be used in network B: it has to be translated in the bridge to a new format that is understood by network B. If we imagine a situation where two paths exist between the two parties (party A and party B) that wish to converse, each path may pass via a different one of the bridges.

If party A calls party B and the call is established via bridge 1, two connections are used: one between party A and bridge 1 and one between bridge 1 and party B. Bridge 1 and bridge 2 both have routes to party B and although party A has established a connection with bridge 1, as mentioned earlier, each packet has complete addressing information and there is the possibility that some packets could be routed to bridge 2. As no connection exists with bridge 2 these packets will get discarded, interrupting the conversation. As a result, the connection with bridge 1 may also clear down (timeout).

EP-A-1035708 (IBM) discloses a communications system for web access and appropriate protocols, which appears to include the feature of the preamble of claim 1. RFC 2454: RIP version 2", IETF RFC 2454, November 1998, XP 02216843, MALKIN G. discloses a communications system comprising some of the features of the preamble of claim 1. This document discloses a known, prior routing system.

The present invention provides a communications system comprising a first network for the communication of data according to a first protocol and a second network for the communication of data according to a second protocol according to claim 1.

The present invention also provides a method for the communication of data between a first node in a first network and a second node in a second network, in which data is communicated in the first network according to a first protocol and data is communicated in the second network according to a second protocol according to claim 14.

Embodiments of the invention will now be described, by way of example only, with reference to the drawings, in which:
Figure 1 shows a conventional communications system using TSBs;
Figures 2 and 3 show the protocol layers of the system of Figure 1;
Figure 4 shows a representation of information flow in a TSB according to an embodiment of the present invention;
Figures 5 to 10 show operation of two TSBs according to further embodiments of the present invention.

Figure 1 shows a TCP/IP network connected to an OSI network via a number of TSBs connected in parallel (only two TSBs are shown for simplicity). Each of the two networks will typically have a large number of attached terminals, one being shown per network for the purposes of illustration. For the purposes of the present description, the terminal connected to the TCP/IP network is designated "source" and the terminal connected to the OSI network is designated "destination".

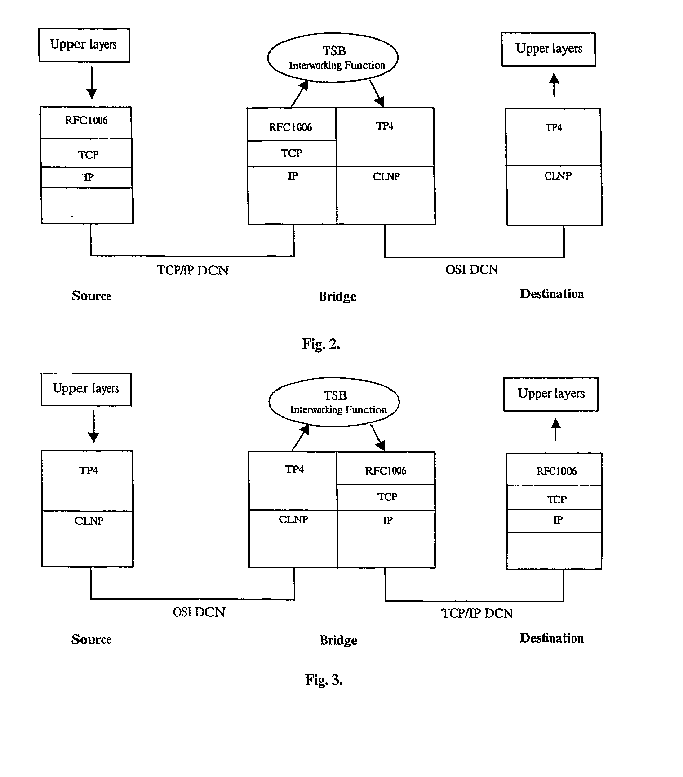

Figure 1 shows a conventional arrangement in which two parallel TSBs are used to provide communication between different networks: in this example between a first network operating under the TCP/IP protocol and a second network operating under the OSI protocol. In order to provide this communication, the TSBs act to interface between the lower layers of the two protocols and to transfer the upper layers of a first protocol (e.g. OSI) from the "non-native" lower layers of a second protocol (e.g. TCP/IP) to the "Dative" lower layers of its own, first protocol. If we look at the end-to-end path, a common set of upper, OSI layers is carried across a region of "non-native" lower layers. The corresponding protocol layers are shown in Figure 2.

Figure 2 illustrates the structure of the protocol layers at the source and destination terminals of Figure 1 and in addition the two sets (or "stacks") of protocol layers of one of the TSBs linking the two networks. Figure 2 illustrates the source terminal, operating in the TCP/IP network that supports a protocol including a number of upper layers, not shown in detail, of OSI protocol. A layer according to RFC 1006 provides accommodation between the upper, OSI, layers and the lower TCP layer which itself is above an IP layer. Further, layers below the IP layer (such as Ethernet or PPP for IP, IEEE 8802.2, 8802.3 for OSI over Ethernet and Q.921 for OSI over SDH DCC channels) are not shown in detail. The source terminal is connected to the TSB via a TCP/IP Data Communications Network (DCN). The TSB supports a TCP/IP-compatible protocol stack comprising similar layers to that of the source terminal. In addition the TSB supports an OSI-compatible protocol stack, the lower layers of which comprise a Transport Protocol Class 4 (TP4) layer above a Connectionless Network Layer Protocol (CLNP) layer. These layers are defined as follows: TP4 in ISO 8072, ISO 8073, ITU-T X.214, ITU-T X.224 and CLNP in ISO 8473. Upper layers, i.e. above TCP or TP4 are not terminated by the TSB. Instead, a single TSB Interworking Function joins the two different protocol stacks together. The TSB communicates with the destination terminal via an OSI DCN. The destination terminal supports OSI protocol layers with a number of upper OSI protocol layers, not shown in detail, above a TP4 layer which itself is above a CLNP layer.

Figure 3 shows the same network as Figure 2 but illustrating communication between a source terminal in an OSI DCN supporting OSI protocol upper layers above OSI lower protocol layers and a destination terminal in a TCP/IP DCN supporting OSI protocol upper layers above TCP/IP lower protocol layers.

Advantageously, the present invention also applies to communication of TCP/IP protocol upper layers, such as hypertext transfer protocol (HTTP), Telnet, etc across TCP/IP and OSI DCNs. In this case, the RFC 1006 layer is replaced by an equivalent layer able to accommodate TCP/IP upper layer over OSI lower layers.

The present invention advantageously provides for the active TSB to be to be chosen by the source terminal from a group of TSBs, when initially setting up the communications path, and advantageously copes with failures in either network or in a TSB of a group of TSBs

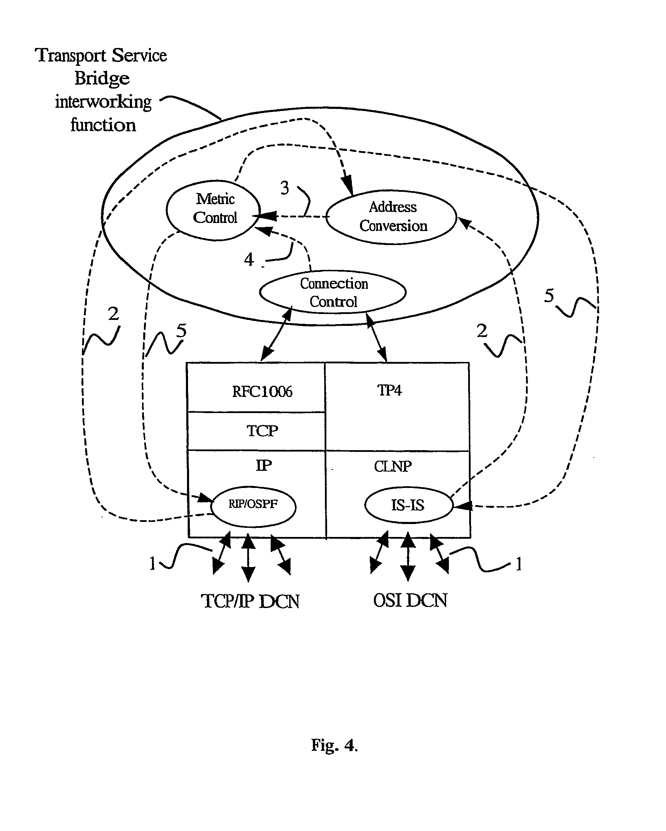

In operation, TSBs advertise their availability by sending messages to connected terminals. According to a preferred embodiment, the present invention uses information from both protocol layers 3 (network/routing) and 4 (transport) to control the advertising of availability by TSBs. The basic control structure according to this preferred embodiment is shown in Figure 4. Routing information is exchanged (see arrows 1) between the TSB and the terminals in each network using level 3 of the appropriate protocol, i.e. IP routing for the TCP/IP DCN and OSI routing for the OSI DCN. Figure 4 shows the protocol layers of a TSB with the TSB interworking function in more detail. As shown in Figure 4, the TSB interworking function comprises functional blocks for connection-control, address-conversion and metric-control. The connection-control block monitors the connection state of the layer-4 connection on each side of the TSB and co-ordinates the set-up and teardown of the link. The address-conversion block controls the conversion between the addressing used by the lower layers of the protocol on one side of the bridge (IP address/port number) and that used by the equivalent layers on the other side (network service access point/ transport service access point: NSAP/TSAP). The mapping between addresses may be set up either by a protocol, manually, or algorithmically (i.e. by a conversion function which processes the address of one domain (or DCN) according to a set of rules and consequently forms an address which is acceptable to the other domain (or DCN)). The metric control block controls which metric values are associated with each route advertised by the routing protocols. Here a metric is a value used in assessing the desirability of one route over another, it can be thought of as a cost..

The arrows 2 to 5 in Figure 4 show the flow of information within the TSB. Status control arrows 2 indicate communication, from layer 3 of the appropriate protocol to the address conversion block, of the availability of routes in the relevant domain (i.e. OSI DCN or TCP/IP DCN). In the OSI domain, routing is controlled by an IS-IS routing function within layer-3. Here, IS refers to "intermediate system". This availability information indicates whether to advertise each address. The address conversion block in turn provides to the metric control block the OSI address information 3 for use in the advertising of routes in the IP domain by the metric control block (or IP address information for the OSI domain if working the other way round). Metric control arrow 4 indicates communication of information from the connection control block to the metric control block to allow link failures in either domain to also influence the advertising of routes by the metric control block by means of the metrics associated with each route. The metric control block then communicates (see arrows 5) to the respective routing protocol the metric values to use in the appropriate DCN.

Hence routes are advertised by combining a metric value with an address value. Layer 3 of the TCP/IP protocol (the IP layer) controls the advertising of the IP routes and layer 4 (the TCP layer) controls the metric value used (e.g. a default value or a lower value).

The terminals choose the "active" TSB using the routing process. For example, in the TCP/IP domain, the terminal will use the TSB that advertises a route to the required destination with the lowest metric value. Two transport connections (layers-4 of the two protocols) are established by the terminals and the active TSB (one connection from the source to the active TSB and one from the active TSB to the destination). Once these connections are established, the routing is "locked" to the active TSB by modification of the route metrics advertised by the active TSB. If the "active" TSB detects a failure affecting the chosen route, the TSB stops advertising the route until availability can again be offered. Availability is offered again by re-advertising the route availability with the original, default metric value.

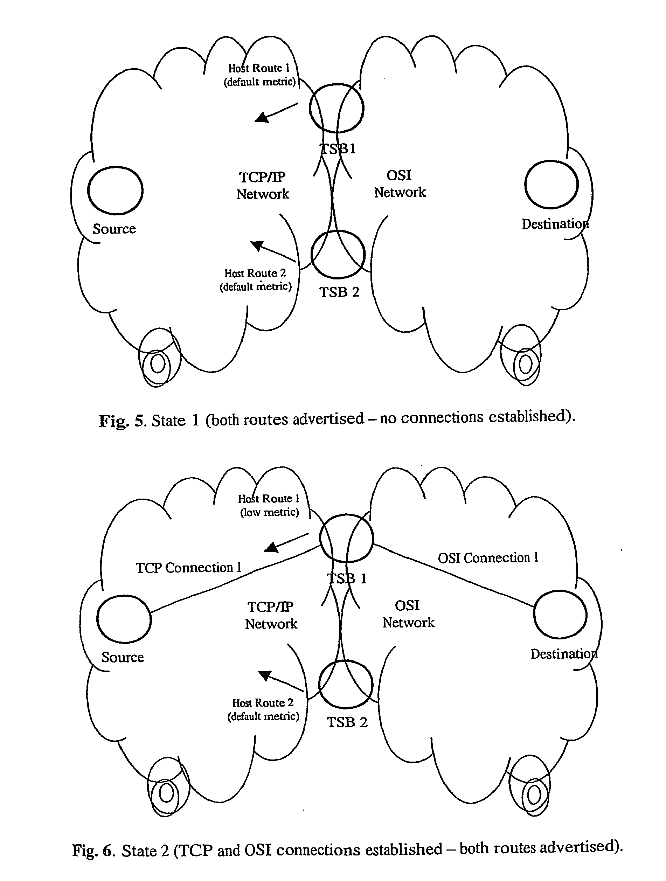

Figure 5 shows the two TSBs of Figure 1 advertising to the source terminal in the TCP/IP network their availability and the availability of a route from that TSB to the destination in the OSI network prior to the setting up of a connection from the source to the destination. Here both TSBs have identified a route to the destination and, as neither has been selected by the source, each is advertising availability associated with the same (i.e. the default) metric value. The TSBs map each IP address in the TCP/IP network relating to a destination in the OSI network onto a different NSAP address in the OSI network. Each of the TSBs advertises its availability for a particular IP address relating to a destination in the OSI network if a route is available from that TSB to the corresponding destination in the OSI network and if an address conversion (OSI to TCP/IP) is available. OSI to TCP/IP address conversion may be by table look-up or algorithmic

Each TSB advertising the availability of a route to a particular destination in the OSI network has the ability to terminate the IP connection as if that TSB was the destination IP address. This means that multiple instances of the same TCP/IP terminal will effectively exist in the TCP/IP network. At first this seems to break the rules of IP network addressing as each TCP/IP terminal should be uniquely addressable. However, a routing function is included in the TSBs so that the destination IP address(es) do not map directly to physical ports but belong to virtual ports supported by the routing function. This means that the IP addresses are not directly accessible at the physical interfaces of the TSB (they are only accessible through the TSB routing function) and hence multiple TSBs can, as a result, be directly connected to the same physical network (i.e. IP sub-net).

As indicated above, significant problems arise if the route between a source and destination changes. This is because TCP is connection-oriented and relies on sequential delivery of packets from the protocol layer-3 (IP layer). A change in routing would break the sequential delivery of packets from the IP layer and cause the original TCP connection to be terminated. This would in turn cause the OSI connection to be terminated. Furthermore, if a new route is established via a different TSB, a new TCP connection will not be established immediately as the source will first have to recognise that the connection has been interrupted and clear itself back to a state from which it can reattempt a connection.

When the TCP connection is established on the new TSB there may still be difficulties in establishing a new OSI connection to the destination as only one connection is allowed into the destination at any time and the previous OSI connection may not have timed-out. In order to avoid unwanted changes of route and the consequent problems outlined above, the invention provides for the connection-state of the OSI connection to influence the routing information held in the TSB such that if a TSB has a connection established for a certain IP address, it changes the metric associated with the associated route to a lower value (see State 2 in Figure 6). Figure 6 shows the communication system of Figure 5 following establishment of a TCP/IP connection from the source to TSB 1 and the establishment of an OSI connection from TSB 1 to the destination. No connection between the destination and source is established via TSB2 which is, as a result, still advertising availability using the default metric. TSB1 has a connection established through it, and is advertising availability with a lower value metric.
This effectively "locks" the routing to the chosen TSB (i.e. TSB1).

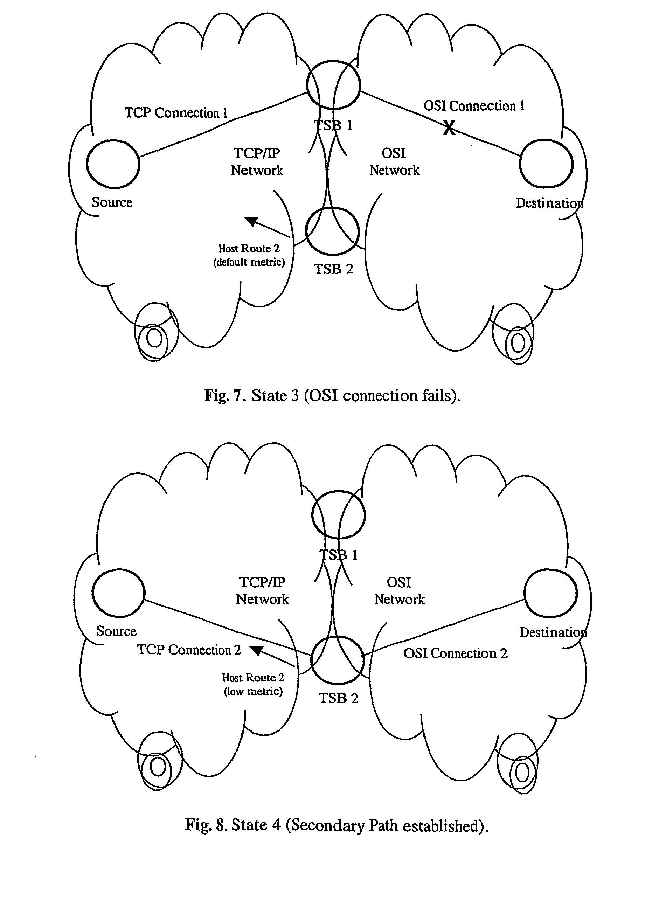

Figures 7 to 10 illustrate how the system of Figure 5 copes with a failure condition. Advantageously, the advertising of multiple available routes via parallel TSBs allows fast recovery from failure conditions, as follows. Failure of either TCP/IP or OSI connections used by an active TSB will cause the active TSB to cease advertising availability. Advertising will either cease indirectly (i.e. if the connection fails in the TCP/IP network) or directly (i.e. if the connection fails in the OSI network):see States 3 - 6 in Figures 7 to 10.

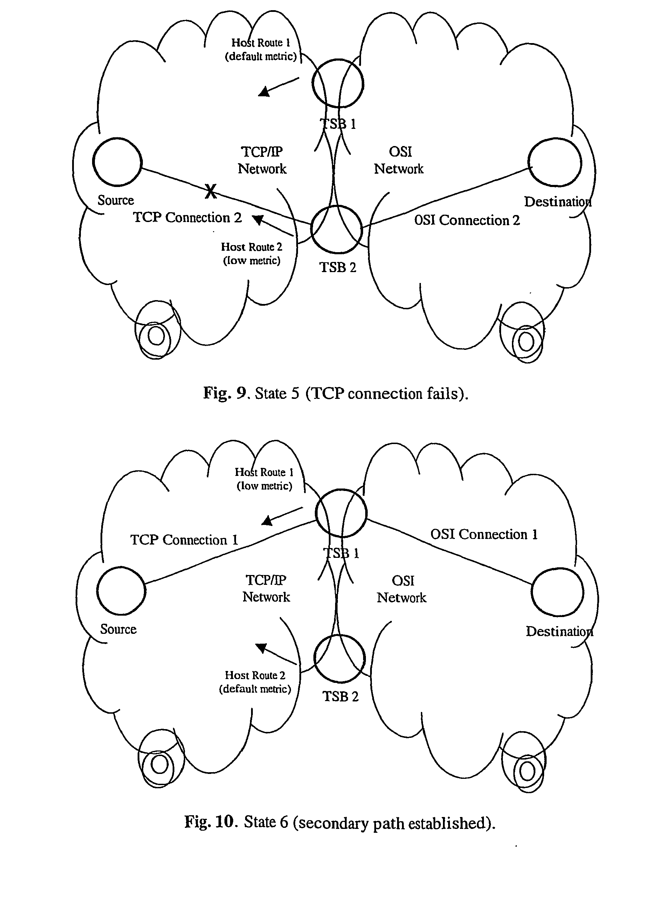

Figures 7-10 show the communication system of Figure 5 in the presence of a fault on the OSI connection from the destination terminal to the active TSB: TSB1. TSB1 reacts to detection of this fault by ceasing to advertise availability to the source. TSB2 is unaffected by the fault and continues to advertise availability in association with the default metric. Figure 8 shows the source reacting to the lack of advertising of availability by TSB 1 by choosing TSB2 to connect to the destination. TSB2, now selected, changes the metric from the default value to a low value. Figure 9 shows the situation some time later when TSB 1 has re-established availability of a path to the destination and has recommenced advertising availability to the source using the default metric. Normally there would be no reason for the source to change the TSB it was using to connect with the destination as TSB2 is still advertising availability using the lower metric and would therefore continue to be preferred by the source. However, Figure 9 also shows a fault in the TCP connection from TSB2 to the source. In Figure 10 we see the result of the source terminal detecting this fault and changing to TSB 1 for connection to the destination. On being selected by the source terminal, TSB 1 continues to advertise availability but now in association with a lower metric. TSB2 ceases to advertise availability on sensing loss of communication with the source terminal. Once the failure condition is removed TSB2 may re-advertise availability.

Advantageously, the present invention provides simple operation with minimal interaction between TSBs (i.e. avoiding a complicated "hot standby" protocol), whilst exploiting the facilities of existing protocols and supporting single or multiple backup TSBs.

The invention is not limited to the embodiments set out above which are used to illustrate the principle thereof. In particular, the routing may equally be "locked" to the active TSB by modification of the route metrics advertised by the non-active TSB(s). The invention has application to instances of 3 or more TSBs arranged effectively in parallel.

The present invention is also applicable to alternative forms of interface for providing communications between networks operating under different protocols, including but not limited to Transport-Layer Gateways.

The invention has been mainly described, by way of example, with reference to a source terminal in a TCP/IP network and a destination terminal in an OSI network. As indicated above, the invention also applies to systems in which the source entity is an OSI terminal and the destination is a TCP/IP terminal and to networks operating according to other protocols..

## Claims

1. A communications system comprising a first network for the communication of data according to a first protocol and a second network for the communication of data according to a second protocol; in which each network comprises at least one node, in which the system also comprises a plurality of communication interfaces for providing communication between a first node of the first network and a second node of the second network;
in which each interface comprises means for sending values to the first node for indicating the availability of communication between that interface and the second node;
in which the system comprises selection means for selecting one of the interfaces for communicating data between the first node and the second node based on the values sent by the interfaces to the first node, **characterised in that** each interface comprises means for detecting the selection of one of the plurality of interfaces and means for modifying, on selection of the selected interface, the value sent to the first node by the selected interface and in which the selection means comprises means for preferentially selecting the interface associated with the modified value.

2. The communications system of claim 1 in which each interface comprises means for detecting an error condition and means for preventing the sending of values by that interface on detection of an error condition.

3. The communications system of any above claim in which each interface has means for sending the values as part of a message comprising an address representing the second node.

4. The communications system of claim 3 in which the address comprised in the message representing the same second node sent from each interface is the same.

5. The communications system of claim 3 or 4 in which the address is an IP address in which the IP address maps onto a NSAP address associated with the second network.

6. The communications system of claim 3 or 4 in which the address is an NSAP address
in which the NSAP address maps onto an IP address associated with the second network.

7. The communications system of any above claim in which the protocol of the first network is TCP/IP and the protocol of the second network is ISO.

8. The communications system of claims 1 to 6 in which the protocol of the first network is ISO and the protocol of the second network is TCP/IP.

9. The communications system of any above claims in which the selection means comprises means for avoiding the use of any interface from which it is not receiving values.

10. The communications system of any above claim in which the interface provides conversion between the first and second protocols.

11. The communications system of any above claim in which the means for sending values to a node of a network is arranged to send the values by means of the protocol for that network.

12. The communications system of any above claim in which the protocols comprise a transport layer and a network layer in which the transport layer comprises means for controlling the values sent.

13. The communications system of any above claim in which the protocols comprise routing metrics in which the system comprises means for sending the values via the routing metrics.

14. A method for the communication of data between a first node in a first network and a second node in a second network, in which data is communicated in the first network according to a first protocol and data is communicated in the second network according to a second protocol; in which a plurality of communication interfaces provide communication between the first node and the second node;
in which the method includes the step of sending values from each interface to the first node indicating the availability of communication between that interface and the second node;
in which the method also includes the step of selecting one of the interfaces for communicating data between the first and second nodes, in which the selection is based on the values sent by the interfaces to the first node **characterised by** the method including the steps of detecting the selection of the selected interface and modifying the value sent by the selected interface to the first node, and the method further including the step of preferentially selecting the interface sending the modified value.

15. The method of any one of claim 14 in which the protocols comprise a transport layer and a network layer including the step of controlling the values sent using the transport layer.

16. The method of any one of claims 14 to 15 in which the protocols comprise routing metrics including the step of sending the values using the routing metrics.

## Patentansprüche

1. Kommunikationssystem, welches ein erstes Netz zur Übermittlung von Daten gemäß einem ersten Protokoll und ein zweites Netz zur Übermittlung von Daten gemäß einem zweiten Protokoll umfasst; wobei jedes Netz mindestens einen Knoten umfasst, wobei das System außerdem mehrere Kommunikationsschnittstellen zum Bereitstellen einer Kommunikation zwischen einem ersten Knoten des ersten Netzes und einem zweiten Knoten des zweiten Netzes umfasst;
wobei jede Schnittstelle Mittel zum Senden von Werten zu dem ersten Knoten zum Anzeigen der Verfügbarkeit von Kommunikation zwischen dieser Schnittstelle und dem zweiten Knoten umfasst;
wobei das System Auswahlmittel zum Auswählen einer der Schnittstellen zum Übermitteln von Daten zwischen dem ersten Knoten und dem zweiten Knoten auf der Grundlage der Werte, die von den Schnittstellen zu dem ersten Knoten gesendet wurden, umfasst, **dadurch gekennzeichnet, dass** jede Schnittstelle Mittel zum Erkennen der Auswahl einer der mehreren Schnittstellen und Mittel zum Ändern, bei Auswahl der ausgewählten Schnittstelle, des von der ausgewählten Schnittstelle zu dem ersten Knoten gesendeten Wertes umfasst, und wobei das Auswahlmittel Mittel zum bevorzugten Auswählen der Schnittstelle umfasst, die mit dem geänderten Wert verknüpft ist.

2. Kommunikationssystem nach Anspruch 1, wobei jede Schnittstelle Mittel zum Erkennen eines Fehlerzustands und Mittel zum Verhindern des Sendens von Werten durch diese Schnittstelle bei Erkennung eines Fehlerzustands umfasst.

3. Kommunikationssystem nach einem der vorhergehenden Ansprüche, wobei jede Schnittstelle Mittel zum Senden der Werte als Teil einer Nachricht aufweist, die eine Adresse umfasst, welche den zweiten Knoten repräsentiert.

4. Kommunikationssystem nach Anspruch 3, wobei die in der Nachricht enthaltene Adresse, welche denselben zweiten Knoten repräsentiert, in den von den einzelnen Schnittstellen gesendeten Nachrichten dieselbe ist.

5. Kommunikationssystem nach Anspruch 3 oder 4, wobei die Adresse eine IP-Adresse ist, wobei die IP-Adresse auf eine NSAP-Adresse abgebildet wird, die mit dem zweiten Netz verknüpft ist.

6. Kommunikationssystem nach Anspruch 3 oder 4, wobei die Adresse eine NSAP-Adresse ist, wobei die NSAP-Adresse auf eine IP-Adresse abgebildet wird, die mit dem zweiten Netz verknüpft ist.

7. Kommunikationssystem nach einem der vorhergehenden Ansprüche, wobei das Protokoll des ersten Netzes TCP/IP ist und das Protokoll des zweiten Netzes ISO ist.

8. Kommunikationssystem nach einem der Ansprüche 1 bis 6,
wobei das Protokoll des ersten Netzes ISO ist und das Protokoll des zweiten Netzes TCP/IP ist.

9. Kommunikationssystem nach einem der vorhergehenden Ansprüche, wobei das Auswahlmittel Mittel zum Vermeiden der Verwendung einer beliebigen Schnittstelle umfasst, von welcher es keine Werte empfängt.

10. Kommunikationssystem nach einem der vorhergehenden Ansprüche, wobei die Schnittstelle für eine Wandlung zwischen dem ersten und dem zweiten Protokoll sorgt.

11. Kommunikationssystem nach einem der vorhergehenden Ansprüche, wobei das Mittel zum Senden von Werten zu einem Knoten eines Netzes dafür eingerichtet ist, die Werte mittels des Protokolls für dieses Netz zu senden.

12. Kommunikationssystem nach einem der vorhergehenden Ansprüche, wobei die Protokolle eine Transportschicht und eine Netzwerkschicht umfassen, wobei die Transportschicht Mittel zum Steuern der gesendeten Werte umfasst.

13. Kommunikationssystem nach einem der vorhergehenden Ansprüche, wobei die Protokolle Routing-Metriken umfassen, wobei das System Mittel zum Senden der Werte über die Routing-Metriken umfasst.

14. Verfahren zur Übermittlung von Daten zwischen einem ersten Knoten in einem ersten Netz und einem zweiten Knoten in einem zweiten Netz, wobei Daten in dem ersten Netz gemäß einem ersten Protokoll übermittelt werden und Daten in dem zweiten Netz gemäß einem zweiten Protokoll übermittelt werden; wobei mehrere Kommunikationsschnittstellen eine Kommunikation zwischen dem ersten Knoten und dem zweiten Knoten bereitstellen;
wobei das Verfahren den Schritt des Sendens von Werten von jeder Schnittstelle zu dem ersten Knoten aufweist, welche die Verfügbarkeit von Kommunikation zwischen dieser Schnittstelle und dem zweiten Knoten anzeigen;
wobei das Verfahren außerdem den Schritt des Auswählens einer der Schnittstellen zum Übermitteln von Daten zwischen dem ersten und dem zweiten Knoten aufweist, wobei die Auswahl auf den Werten beruht, die von den Schnittstellen zu dem ersten Knoten gesendet wurden, **dadurch gekennzeichnet, dass** das Verfahren die Schritte des Erkennens der Auswahl der ausgewählten Schnittstelle und des Änderns des von der ausgewählten Schnittstelle zu dem ersten Knoten gesendeten Wertes aufweist, und das Verfahren ferner den Schritt des bevorzugten Auswählens der Schnittstelle, die den geänderten Wert sendet, aufweist.

15. Verfahren nach Anspruch 14, wobei die Protokolle eine Transportschicht und eine Netzwerkschicht umfassen,
wobei das Verfahren den Schritt des Steuerns der gesendeten Werte unter Verwendung der Transportschicht aufweist.

16. Verfahren nach einem der Ansprüche 14 bis 15, wobei die Protokolle Routing-Metriken umfassen, wobei das Verfahren den Schritt des Sendens der Werte unter Verwendung der Routing-Metriken aufweist.

## Revendications

1. Système de communication comprenant un premier réseau pour la communication de données conformément à un premier protocole et un second réseau pour la communication de données conformément à un second protocole ; dans lequel chaque réseau comprend au moins un noeud, dans lequel le système comprend aussi une pluralité d'interfaces de communication pour fournir une communication entre un premier noeud du premier réseau et un second noeud du second réseau ;
dans lequel chaque interface comprend des moyens pour envoyer des valeurs au premier noeud pour indiquer la disponibilité de communication entre cette interface et le second noeud ;
dans lequel le système comprend des moyens de sélection pour sélectionner une des interfaces afin de communiquer des données entre le premier noeud et le second noeud sur la base des valeurs envoyées par les interfaces au premier noeud, **caractérisé en ce que** chaque interface comprend des moyens de détection de la sélection d'une de la pluralité d'interfaces et des moyens de modification, lors de la sélection de l'interface sélectionnée, de la valeur envoyée au premier noeud par l'interface sélectionnée et dans lequel les moyens de sélection comprennent des moyens pour sélectionner préférentiellement l'interface associée à la valeur modifiée.

2. Système de communication selon la revendication 1,
dans lequel chaque interface comprend des moyens pour détecter une condition d'erreur et des moyens pour empêcher l'envoi de valeurs par cette interface lors de la détection d'une condition d'erreur.

3. Système de communication selon une quelconque des revendications ci-dessus, dans lequel chaque interface comporte des moyens pour envoyer les valeurs en tant que partie d'un message comprenant une adresse représentant le second noeud.

4. Système de communication selon la revendication 3,
dans lequel l'adresse comprise dans le message représentant le même second noeud envoyé depuis chaque interface est la même.

5. Système de communication selon la revendication 3 ou 4, dans lequel l'adresse est une adresse IP, dans lequel l'adresse IP est mise en correspondance avec une adresse NSAP associée au second réseau.

6. Système de communication selon la revendication 3 ou 4, dans lequel l'adresse est une adresse NSAP, dans lequel l'adresse NSAP est mise en correspondance avec une adresse IP associée au second réseau.

7. Système de communication selon une quelconque des revendications ci-dessus, dans lequel le protocole du premier réseau est TCP/IP et le protocole du second réseau est ISO.

8. Système de communication selon les revendications 1 à 6, dans lequel le protocole du premier réseau est ISO et le protocole du second réseau est TCP/IP.

9. Système de communication selon une quelconque des revendications ci-dessus, dans lequel le moyen de sélection comprend des moyens pour éviter l'utilisation de toute interface en provenance de laquelle il ne reçoit pas des valeurs.

10. Système de communication selon une quelconque des revendications ci-dessus, dans lequel l'interface fournit une conversion entre le premier et le second protocole.

11. Système de communication selon une quelconque des revendications ci-dessus, dans lequel les moyens d'envoi de valeurs à un noeud d'un réseau sont agencés de manière à envoyer les valeurs au moyen du protocole prévu pour ce réseau.

12. Système de communication selon une quelconque des revendications ci-dessus, dans lequel les protocoles comprennent une couche de transport et une couche de réseau, dans lequel la couche de transport comprend des moyens de contrôle des valeurs envoyées.

13. Système de communication selon une quelconque des revendications ci-dessus, dans lequel les protocoles comprennent des métriques de routage, dans lequel le système comprend des moyens pour envoyer les valeurs via les métriques de routage.

14. Procédé pour la communication de données entre un premier noeud dans un premier réseau et un second noeud ans un second réseau, dans lequel les données sont communiquées dans le premier réseau conformément à un premier protocole et les données sont communiquées dans le second réseau conformément à un second protocole ; dans lequel une pluralité d'interfaces de communication fournissent une communication entre le premier noeud et le second noeud ;
dans lequel le procédé inclut l'étape d'envoi de valeurs depuis chaque interface vers le premier noeud indiquant la disponibilité de communication entre cette interface et le second noeud ;
dans lequel le procédé inclut aussi l'étape de sélection d'une des interfaces en vue de la communication de données entre le premier et le second noeud, dans lequel la sélection est basée sur les valeurs envoyées par les interfaces au premier noeud, **caractérisé en ce que** le procédé inclut les étapes de détection de la sélection de l'interface sélectionnée et de modification de la valeur envoyée par l'interface sélectionnée au premier noeud et le procédé inclut en outre l'étape de sélection préférentielle de l'interface envoyant la valeur modifiée.

15. Procédé selon la revendication 14, dans lequel les protocoles comprennent une couche de transport et une couche de réseau incluant l'étape de contrôle des valeurs envoyées en utilisant la couche de transport.

16. Procédé selon une quelconque des revendications 14 à 15, dans lequel les protocoles comprennent des métriques de routage incluant l'étape d'envoi des valeurs en utilisant les métriques de routage.
